**Europäisches Patentamt**

(19) **European Patent Office**

**Office européen des brevets**

(11) Veröffentlichungsnummer: **0 132 751**
**B1**

(12) **EUROPÄISCHE PATENTSCHRIFT**

(45) Veröffentlichungstag der Patentschrift:
**17.12.86**

(21) Anmeldenummer: **84108369.4**

(22) Anmeldetag: **17.07.84**

(51) Int. Cl.⁴: **C 03 C 3/093,** C 03 C 3/087,
C 03 C 3/108, C 03 C 8/24

(54) **Thermisch hoch belastbare Wolfram-Einschmelzgläser.**

(30) Priorität: **27.07.83 DE 3327072**

(43) Veröffentlichungstag der Anmeldung:
**13.02.85 Patentblatt 85/7**

(45) Bekanntmachung des Hinweises auf die Patenterteilung:
**17.12.86 Patentblatt 86/51**

(84) Benannte Vertragsstaaten:
**BE FR GB NL**

(56) Entgegenhaltungen:
**DE-A-2 756 555**
**DE-B-2 941 215**
**GB-A-597 293**

(73) Patentinhaber: **Schott Glaswerke,**
**Hattenbergstrasse 10, D-6500 Mainz (DE)**
(84) Benannte Vertragsstaaten: **BE FR GB NL**

(73) Patentinhaber: **Carl- Zeiss- Stiftung trading as**
**SCHOTT GLASWERKE, Hattenbergstrasse 10,**
**D-6500 Mainz 1 (DE)**
(84) Benannte Vertragsstaaten: **GB**

(72) Erfinder: **Sack, Werner, Dr. Dipl.- Chem., An der**
**Feilkirsch 15, D-6500 Mainz (DE)**

(74) Vertreter: **Rasper, Joachim, Dr., Bierstadter Höhe**
**22, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Wolfram-Einschmelzgläser sind seit vielen Jahren bekannt; im allgemeinen sind es Borosilicatgläser mit etwa folgendem Zusammensetzungsbereich:

$SiO_2$ 74,00 - 76,00 Gew. %
$B_2O_3$ 11,50 - 17,00 Gew. %
$Al_2O_3$ 1,50 - 4,00 Gew. %
$ZrO_2$ 0 - 1,00 Gew. %
$Na_2O$ 4,00 - 6,30 Gew. %
$K_2O$ 0 - 1,50 Gew. %
CaO 0,60 - 1,50 Gew. %
MgO 0,30 - 0,40 Gew. %
BaO 0 - 2,20 Gew.%
F 0 - 0,30 Gew. %
Cl 0,15 - 0,25 Gew. %
$As_2O_3$, $Sb_2O_3$ 0 - 0,30 Gew. %
und den Eigenschaftswerten:
$\alpha . 10^6$ (20 - 300°C)/°C $= 3,9 - 4,2$
Tg (°C) $= 520 - 550$
Ew (°C) $= 770 - 805$
$V_A$ (°C) $= 1135 - 1230$
$V_A$ - Ew (°C) $= 365 - 425$
Dichte (g/ccm) $= 2,25 - 2,34$
$T_{K100}$ (°C) $= 200 - 275$
Bisher werden aus diesem Glastyp hauptsächlich hergestellt:
- Entladungslampen
- Senderöhren
- Röntgenröhren
- Apparate- und Wasserstandsgläser.
Die Fertigung erfolgt bevorzugt mit Blas-, Zieh- oder Preßautomaten.

In neuerer Zeit werden in der Lampentechnik in steigendem Maße höhere Leistungen angestrebt mit sog. Hochenergie- bzw. Hochleistungslampen. Das führt zu einer verstärkten Erwärmung der Glaskörper bis auf Temperaturen von über 630°C, so daß diese hierbei teilweise deformieren und unerwünschte Restspannungen erhalten. Das hat zur Folge, daß diese klassischen Wolframgläser für die Fertigung von Hochleistungslampen nicht mehr verwendet werden können.

Dasselbe gilt auch für die Herstellung von Senderöhren. Die Borosilicatgläser sind dafür bedingt geeignet; z.B. nur für die Fertigung von Röhren für den Radiofrequenzbereich, nicht aber für die Fertigung von Höchstfrequenzröhren Aufgrund der zu hohen die elektrischen Verluste und der zu geringen elektrischen Isolation erhitzen sich hierbei die Glaskolben so stark, daß sie im Bereich deformieren, weil die Zähigkeit im Tg- und Ew-Bereich zu niedrig ist.

Die DE-A -2 756 555 beschreibt thermisch hochvorspannbare Gläser, die infolge niedriger Wärmedehnungskoeffizienten durch eine hohe Temperaturwechselfestigkeit gekennzeichnet sind. Dies wird mit einer Glaszusammensetzung erreicht, die von den Alkalioxiden nur $Na_2O$ enthält in einem Bereich von 1,50 - 6,00 Gew.-%. Damit besitzen diese bekannten Gläser einen geringen elektrischen Isolationswert. Andere für die Eigenschaften wesentliche Unterschiede sind ein geringerer CaO- und MgO-Gehalt bei einem gleichzeitig höheren $SiO_2$, BaO und ZnO-Gehalt.

Ziel der Erfindung sind alumosilicatische Wolfram-Einschmelzgläser, die den eingangs beschriebenen Gläsern deutlich überlegen sind in der thermischen Belastbarkeit (Tg und Ew sind um rund 100 bzw. 65°C höher) und in der elektrischen Isolation (es sind $T_{K100}$-Werte von 248 - 310°C gezielt einstellbar), bei $V_A$-Werten < 1200°C. Aus der geringeren verarbeitungstechni schen Länge ($V_A$ - Ew $= 301 - 322$°C) gegenüber den obigen Borosilicatgläsern ($V_A$ - Ew $= 365 - 425$°C) ergibt sich weiterhin eine vorteilhafte höhere Automatengeschwindigkeit bei der Formgebung und Weiterverarbeitung, was einer Leistungssteigerung gleichbedeutend ist.

Die Gläser haben für die Fertigung und Weiterverarbeitung auch eine ausreichende Kristallisationsfestigkeit mit einer maximalen Kristallisationstemperatur zwischen 900 und 1125°C und einer Entglasungsgeschwindigkeit von 0,1 - 0,4 µm/min im Maximum, bestimmt nach einer Gradientenmethode bei 60 min Temperzeit und aufsteigender Temperatur (beschrieben im Glastechn. Ber. 41 (1968), Heft 4, Seite 138 - 145).

In der chem. Resistenz liegen sie in der Wasserbeständigkeit innerhalb der 1. Klasse nach DIN 121 1 1, hinsichtlich Laugenbeständigkeit innerhalb der 2. Klasse nach DIN 52322, und in der Säurebeständigkeit nach DIN 12116 gehören die Gläser zur 3./4. Klasse. Damit können diese Gläser in vorteilhafter Weise eingesetzt werden für:
- Hochleistungslampen,
- Hochleistungssenderöhren,
- Hochleistungsröntgenröhren und auch als

- Wasserstandsgläser,

da hier nicht mit einem sauren Angriff zu rechnen ist. Ungeeignet sind die Gläser als chemische Apparategläser.

Die erfindungsgemäßen Gläser liegen innerhalb folgendem Zusammensetzungsbereich:

$SiO_2$ 58,00 - 63,50 Gew. %
$B_2O_3$ 3,50 - 6,00 Gew. %
$Al_2O_3$ 12,50 - 17,00 Gew. %
$ZrO_2$ 0 - 1,20 Gew. %
CaO 3,50 - 6,40 Gew. %
MgO 2,20 - 4,00 Gew. %
ZnO 4,50 - 9,00 Gew. %
BaO 0 - 3,30 Gew. %
PbO 0 - 2,70 Gew. %
$Li_2O$ 0,50 - 1,20 Gew. %
$Na_2O$ 0,50 - 1,00 Gew. %

mit den Läutermittelzusätzen:

$Sb_2O_3$ 0 - 0,30 Gew.-%
NaCl 0 - 0,80 Gew.-%.

Mit folgenden Summen-Gew.-% bzw. Verhältniszahlen:

CaO + MgO 5,70 - 11,10 Gew.-%
CaO + MgO + ZnO 12,20 - 18,60 Gew.-%
CaO/MgO 1,29 - 1,73
$Li_2O$ + $Na_2O$ 1,20 - 2,00 Gew.-%
$Li_2O$/$Na_2O$ 0,71 - 1,80

Für die elektrische Isolation ($T_{K100}$-Wert) und die dielektrischen Verluste ($\varepsilon$ und tan $\delta$) sind in diesem Zusammensetzungsbereich in erster Linie die Summe $Li_2O$ + $Na_2O$, sowie das Verhältnis $Li_2O$: $Na_2O$ verantwortl ich. Die günstigsten Werte werden erhalten, je geringer die Alkalisumme und je kleiner die Verhältniszahl $Li_2O$: $Na_2O$ ist.

Bei der Läuterung mit Kochsalz (NaCl) ist daher zu beachten, daß sich das NaCl teilweise in $Na_2O$ und $Cl_2$ spaltet, wodurch sich gegenüber der Synthese ein höherer analyti scher $Na_2O$-Gehalt ergibt - z.T. bi s zu 0,4 Gew.-% - abhängig von der Schmelzführung (Temperatur und Zeit) und der eingeführten Menge.

Als unverzichtbare Flußmittel sind in dem erfindungsgemäßen Zusammensetzungsbereich neben den Alkalien $Li_2O$ + $Na_2O$, der Borsäure $B_2O_3$, vor allen Dingen das Calcium- und Magnesiumoxid (CaO + MgO) anzusehen. Ein Gehalt >11,1 Gew.-% ist unerwünscht; er führt zu einer Verschlechterung der Kristallisationsfestigkeit und zu Schwierigkeiten bei der Einstellung der erforderlichen Wärmedehnung als Wolfram-Einschmelzglas. Hierfür erwies sich das Zinkoxid ZnO als gut geeignet, weil zum einen sein Beitrag zur Wärmedehnung niedrig ist und zum anderen die Zähigkeit im VA-Bereich hierdurch nicht ungebührlich erhöht wird, im Gegensatz zum BaO. Von letzterem sind daher nur kleinere Mengen einführbar. Ein Teil des ZnO ist durch PbO ersetzbar, doch damit ergibt sich die Gefahr der Verfärbung eines derartigen Glases bei der Weiterverarbeitung durch Reduktion des PbO.

Für die mäßi ge Säurebeständigkeit ist in hohem Maße der hohe $Al_2O_3$-Gehalt verantwortlich. Aus Zähigkeits- und aus Stabilisationsgründen zur Vermeidung von Entmischungen und zu starken Kri stallisationstendenzen ist ein solcher Gehalt jedoch notwendig.

Für die Gemengebereitung der erfindungsgemäßen Gläser können die in der Produkti on von technischen Gläsern bekannten Rohstoffe eingesetzt werden. So empfiehlt sich der Dolomit für CaO und MgO, Petalit für $Li_2O$ und Zirkonsand für $ZrO_2$.

In den Tabellen 1 und 2 sind 12 Zusammensetzungsbeispiele mit den wichtigsten Eigenschaftswerten aufgeführt zur Charakterisierung des beanspruchten Zusammensetzungsbereiches.

**Tabelle 1**

Zusammensetzungsbeispiele in Gew. %

| Bestandteile | 1 | 2 | 3 | 4 | 5 | 6 | 7 | 8 | 9 | 10 | 11 |
|---|---|---|---|---|---|---|---|---|---|---|---|
| $SiO_2$ | 61,00 | 61,50 | 63,50 | 61,70 | 60,70 | 58,50 | 60,50 | 60,50 | 59,50 | 58,00 | 60,00 |
| $B_2O_3$ | 3,50 | 5,50 | 5,50 | 6,00 | 6,00 | 5,50 | 5,50 | 5,50 | 5,00 | 5,50 | 5,50 |
| $Al_2O_3$ | 14,00 | 14,00 | 12,50 | 14,50 | 15,00 | 17,00 | 15,00 | 15,00 | 15,00 | 15,00 | 14,50 |
| $ZrO_2$ | 1,20 | 1,20 | 1,20 | 1,20 | 1,20 | 1,20 | 1,20 | | | 1,20 | 1,20 |
| $CaO$ | 3,80 | 3,50 | 6,30 | 5,70 | 5,40 | 5,40 | 6,00 | 6,00 | 6,00 | 6,00 | 6,00 |
| $MgO$ | 2,20 | 2,20 | 4,80 | 4,40 | 4,20 | 4,20 | 4,50 | 4,50 | 4,50 | 4,50 | 4,50 |
| $ZnO$ | 9,00 | 6,50 | 4,50 | 4,50 | 5,35 | 4,50 | 5,30 | 6,60 | 8,10 | 5,30 | 6,50 |
| $BaO$ | 3,00 | 3,30 | | | | | | | | | |
| $PbO$ | | | | | | | 2,10 | | | 2,70 | |
| $Na_2O$ | 1,00 | 1,00 | 0,50 | 0,80 | 0,75 | 0,50 | 0,70 | 0,70 | 0,70 | 0,70 | 0,70 |
| $Li_2O$ | 1,00 | 1,00 | 0,90 | 0,90 | 0,80 | 0,80 | 0,70 | 0,60 | 0,60 | 0,50 | 0,50 |
| $Sb_2O_3$ | 0,30 | 0,30 | 0,30 | 0,30 | | 0,30 | 0,10 | 0,10 | 0,10 | 0,10 | 0,10 |
| $NaCl$ | | | | | 0,80 | | 0,50 | 0,50 | 0,50 | 0,50 | 0,50 |
| Prozent Summe | 100,00 | 100,00 | 100,00 | 100,00 | 100,20 | 100,00 | 100,00 | 100,00 | 100,00 | 100,00 | 100,00 |
| $Li_2O + Na_2O$ | 2,00 | 2,00 | 1,40 | 1,70 | 1,55 | 1,30 | 1,40 | 1,30 | 1,30 | 1,20 | 1,20 |
| $Li_2O/Na_2O$ | 1,00 | 1,00 | 1,80 | 1,13 | 1,07 | 1,60 | 1,00 | 0,86 | 0,86 | 0,71 | 0,71 |
| $CaO + MgO + ZnO$ | 15,00 | 12,20 | 15,60 | 14,60 | 14,95 | 14,10 | 15,80 | 17,10 | 18,60 | 15,80 | 17,00 |
| $CaO + MgO$ | 6,00 | 5,70 | 11,10 | 10,10 | 9,60 | 9,60 | 10,50 | 10,50 | 10,50 | 10,50 | 10,50 |
| $CaO/MgO$ | 1,73 | 1,59 | 1,31 | 1,30 | 1,29 | 1,29 | 1,33 | 1,33 | 1,33 | 1,33 | 1,33 |

**Tabelle 2**

Eigenschaftswerte der Gläser 1-12 von Tabelle 1

| Eigenschaften | 1 | 2 | 3 | 4 | 5 | 6 | 7 | 8 | 9 | 10 | 11 |
|---|---|---|---|---|---|---|---|---|---|---|---|
| $\alpha \cdot 10^6$ (20 - 300)/°C | 4,08 | 4,05 | 4,12 | 4,14 | 4,09 | 4,00 | 4,08 | 4,14 | 4,07 | 4,17 | 4,02 |
| $T_g$ (°C); $\eta$ ca. $10^{13,5}$ P | 630 | 625 | 635 | 638 | 637 | 649 | 643 | 643 | 640 | 642 | 648 |
| $E_w$ (°C); $\eta = 10^{7,6}$ P | 866 | | 860 | | 865 | 869 | 868 | 862 | 868 | 863 | 868 |
| $V_A$ (°C); $\eta = 10^4$ P | 1187 | 1198 | 1172 | 1165 | 1187 | 1175 | 1180 | 1170 | 1182 | 1164 | 1175 |
| $V_A$ - $E_w$ (°C) | 321 | | 312 | | 322 | 306 | 312 | 308 | 314 | 301 | 307 |
| Dichte (g/ccm) | 2,633 | 2,573 | 2,536 | 2,530 | 2,531 | 2,587 | 2,543 | 2,549 | 2,598 | 2,606 | 2,56 |
| $T_{K100}$ (°C); $\rho = 10^8 \Omega \cdot cm$ | 248 | 253 | 265 | 270 | 261 | 280 | 275 | 302 | 310 | 302 | 300 |
| *) Verschmelzspg. in nm/cm im Stand.- Schott-Verschmelz-glas 8486 (- Zugspg.; + Druckspg.) | -90 | -150 | -80 | -70 | -90 | -200 | -80 | -50 | -110 | -60 | -190 |
| Wasserbeständigkeit nach DIN 12111 | alle innerhalb der ersten Klasse | | | | | | | | | | |
| Laugenbeständigkeit nach DIN 52322 | alle innerhalb der zweiten Klasse | | | | | | | | | | |
| Säurebeständigkeit nach DIN 12116 | 3. Kl. | 3. Kl. | 3. Kl. | 4. Kl. | 3. Kl. | 4. Kl. | 3. Kl. | | | 4. Kl. | 3. Kl. |
| Obere Entglasungstempe-ratur OEG (°C) | 1050 - 1195 | | | | | | | | | | |
| Untere Entglasungstempe-ratur UEG (°C) | 825 - 975 | | | | | | | | | | |
| Entglasungsmaximum $KG_{max}$ (°C) | 900 - 1125 | | | | | | | | | | |
| Entglasungsgeschwindig-keit im Maximum KG (µ/min) | 0,1 und 0,4 | | | | | | | | | | |

*) Die Verschmelzspannung entspricht einer Spannungsdoppelbrechung, dargestellt als optischer Gangunterschied in nm/cm.

## Patentansprüche

1. Glaszusammensetzungen für thermisch hoch belastbare Gl as-/ Wolframeinschmelzungen mit Wärmedehnungskoeffizienten im Temperaturbereich von 20 - 300°C von 4,02 bis 4,17 - $10^{-6}$/°C, dadurch gekennzeichnet, daß die Transformationstemperaturen (Tg) dieser Gläser zwischen 625 und 649°C, ihre Erweichungstemperaturen zwi schen 855 und 869°C, ihre Verarbeitungstemperaturen zwischen 1164 und 1198°C, ihre verarbeitungstechnische Länge $V_A$ - Ew zwischen 300 und 325°C und ihre $T_{K100}$-Werte zwischen 248 und 310°C liegen, und daß sie im Ansatz, berechnet als Oxid-Gew.-% enthalten:

$SiO_2$ 58,00 - 63,50 Gew.-%
$B_2O_3$ 3,50 - 6,00 Gew.-%
$Al_2O_3$ 12,50-17,00 Gew.-%
$ZrO_2$ 0 - 1,20 Gew.-%
CaO - 3,50 - 6,40 Gew.-%
MgO 2,20 - 4,80 Gew.-%
ZnO 4,50- 9,00 Gew.-%
BaO 0 - 3,30 Gew.-%
PbO 0 - 2,70 Gew.-%
$Li_2O$ 0,50- 1,20 Gew.-%
$Na_2O$ 0,50 - 1,00 Gew.-%
und als Läutermittel:
$Sb_2O_3$ 0 - 0'30 Gew.-%
NaCl 0 - 0,80 Gew.-%
Mit folgenden Summen-Gew.-% bzw. Verhältniszahlen:
CaO + MgO 5,70-11,10 Gew.-%
CaO + MgO + ZnO 12,20 - 18,60 Gew.-%
CaO/ MgO 1,29- 1,73
$Li_2O$ + $Na_2O$ 1,20- 2,00 Gew.-%
$Li_2O$/$Na_2O$ 0,71 - 1,80

2. Glaszusammensetzungen nach Anspruch 1. dadurch gekennzeichnet, daß die Alkalisumme $Li_2O$ + $Na_2O$ zwischen 1,20 und 1,40 Gew. % liegt bei einem $Li_2O$/$Na_2O$-Verhältnis von 0,71 - 1,6 mit $T_{K100}$-Werten von 275 - 310°C, und daß sie im Ansatz, berechnet als Oxid-Gew % enthalten.

$SiO_2$ 58,50 - 60,50 Gew. %
$B_2O_3$ 5,00 - 5,50 Gew. %
$Al_2O_3$ 14,50 - 17,00 Gew. %
$ZrO_2$ 0 - 1,20 Gew. %
CaO 5,40 - 6,00 Gew. %
MgO 4,20 - 4,50 Gew. %
CaO + MgO 9,60 - 10,50 Gew. %
CaO/MgO 1,29 - 1,33 Gew. %
ZnO 4,50 - 8,10 Gew. %
CaO + MgO + ZnO 14,10 - 18,60 Gew. %
PbO 0 - 2,70 Gew. %
$Li_2O$ 0,50 - 0,80 Gew. %
$Na_2O$ 0,50 - 0,70 Gew. %

3. Zusammensetzung für Glas-/Wolframeinschmelzungen nach Anspruch 1 oder 2, gekennzeichnet durch eine Alkalisumme $Li_2O$ + $Na_2O$ von 1,20 Gew. %, einem $Li_2O$/$Na_2O$-Verhältnis von 0,71 und einem $T_{K100}$-Wert von mindestens 300 °C, sowie der folgenden Zusammensetzung, berechnet als Oxid-Gew.%:

$SiO_2$ 60,00 Gew. %
$B_2O_3$ 5,50 6ew. %
$Al_2O_3$ 14,50 Gew. %
$ZrO_2$ 1,20 Gew. %
CaO 6,00 Gew. %
MgO 4,50 Gew. %
ZnO 6,50 Gew. %
$Li_2O$ 0,50 Gew. %
$Na_2O$ 0,70 Gew. %
$Sb_2O_3$ 0,10 Gew. %
NaCl 0,50 Gew. %

## Claims

1. Glass composition for a glass-/tungsten seal capable of withstanding high thermal stress, having coefficients of heat expansion between about 4,02 and 4,17 - $10^{-6}$/°C in the temperature range between 20 and

6

300°C, characterized in that the transformation temperatures (Tg) of the said glasses are between 625 and 649°C, their softening temperatures are between 855 and 869°C, their working temperatures are between 1164 and 1198°C their working range $V_A$-EW is between 300 and 325°C and their $T_{K100}$- values are between 248 and 310°C and further characterized. in that they consist in the batch of the following constituents, in amounts calcul ated as oxide weight percent:

$SiO_2$ 58,00 -63,50 wt %
$B_2O_3$ 3,50- 6,00wt%
$Al_2O_3$ 12,50-17,00wt%
$ZrO_2$ 0 - 1,20 wt%
CaO 3,50 - 6,40 wt%
MgO 2,20 - 4,80 wt%
ZnO 4,50 - 9,00 wt%
BaO 0 - 3,30 wt%
PbO 0 - 2,70 wt %
$Li_2O$ 0,50- 1,20wt%
$Na_2O$ 0,50 - 1,00 wt %
and as fining agents
$Sb_2O_3$ 0 - 0,30 wt %
NaCl 0 - 0,80 wt%

with the following total weight percent ratios:

CaO + MgO 5,70 -11,10wt%
CaO + MgO + ZnO 12,20 - 18,60 wt %
CaO/ MgO 1,29 - 1,73
$Li_2O$ + $Na_2O$ 1,20 - 2,00 wt%
$Li_2O$/$Na_2O$ 0,71 - 1,80

2. Glass compositions according to claim 1, characterized in that the total alkali content $Li_2O$ + $Na_2O$ is between 1,20 and 1,40 wt% with a $Li_2O$/$Na_2O$ ratio of 0,71 -1,6, and $T_{K100}$-values from 275 to 310°C, and further characterized in that they consist in the batch of the following constituents, in amounts calculated as oxide weight percent:

$SiO_2$ 58,50 -60,50 wt %
$B_2O_3$ 5,0D - 5,50 wt%
$Al_2O_3$ 14,50-17,00 wt%
$ZrO_2$ 0 - 1,20 wt %
CaO 5,40 - 6,00 wt%
MgO 4,20 - 4,50 wt %
CaO + MgO 9,60 -10,50 wt %
CaO/MgO 1,29- 1,33 wt %
ZnO 4,50- 8,10 wt%
CaO + MgO + ZnO 14,10 - 18,60 wt %
PbO 0 - 2,70 wt %
$Li_2O$ 0,50 - 0,80 wt%
$Na_2O$ 0,50- 0,70 wt%

3. Glass composition for a glass-/tungsten seal according to claim 1 or 2, characterized by a total alkali content $Li_2O$ + $Na_2O$ of 1,20 wt % a $Li_2O$/$Na_2O$ ratio of 0,71 and a $T_{K100}$ value of at least 300°C, and further characterized by the following composition, calculated as oxide wt %:

$SiO_2$ 60,00 wt%
$B_2O_3$ 5,50 wt%
$Al_2O_3$ 14,50 wt %
$ZrO_2$ 1,20 wt %
CaO 6,00 wt%
MgO 4,50 wt%
ZnO 6,50 wt %
$Li_2O$ 0,50 wt%
$Na_2O$ 0,70 wt%
$Sb_2O_3$ 0,10 wt%
NaCl 0,50 wt %.

## Revendications

1. Compositions de verre pour inclusions par fusion verre/tungstène pouvant supporter des charges thermiques importantes, avec des coefficients de dilatation thermique de 4,02 à 4,17 - $10^{-6}$ % dans la plage de température de 20 - 300°C, caractérisées en ce que les températures de transformation (Tg) de ces verres sont comprises entre 625 et 649°C, leurs températures de ramollissement entre 855 et 869°C, leurs températures de travail entre 1164 et 1198°C, leur plage de travail $V_A$ - Ew est comprise entre 300 et 325°C et leurs valeurs $T_{K100}$ sont comprises entre 248 et 310°C et qu'ils comtiennent, dans le mélange initial, calculés sous forme de pourcentages en poids d'oxyde:

$SiO_2$ - 58,00 - 63,50 % en poids
$B_2O_3$, 3,50 - 6,00 % en poids
$Al_2O_3$ 12,50 - 17,00 % en poids
$ZrO_2$ 0 - 1,20 % en poids
CaO 3,50 - 6,40 % en poids
MgO 2,20 - 4,80 % en poids
ZnO 4,50 - 9,00 % en poids
BaO 0 - 3,30 % en poids
PbO 0 - 2,70 % en poids
$Li_2O$ 0,50 - 1,20 % en poids
$Na_2O$ 0,50 - 1,00 % en poids
avec les additions d'affinage:
$Sb_2O_3$ 0 - 0,30 % en poids
NaCl 0 - 0,80 % en poids
avec les pourcentages en poids totaux respectivement les rapports suivants:
CaO + MgO 5,70 - 11,10 % en poids
CaO + MgO + ZnO 12,20 - 18,60 % en poids
CaO/MgO 1,29 - 1,73
$Li_2O$ + $Na_2O$ 1,20 - 2,00 % en poids
$Li_2O$/$Na_2O$ 0,71 - 1,80

2. Compositions de verre selon la revendication 1, caractérisées en ce que la somme des alcalis $Li_2O$ + $Na_2O$ est comprise entre 1,20 et 1,40 % en poids pour un rapport $Li_2O$/$Na_2O$ de 0,71 - 1,6, avec des valeurs $T_{K100}$ de 275 - 310°C et qu'elles contiennent dans le mélange initial, calculés comme des pourcentages en poids d'oxyde:

$SiO_2$ 58,50 - 60,50 % en poids
$B_2O_3$ 5,00 - 5,50 % en poids
$Al_2O_3$ 14,50 - 17,00 % en poids
$ZrO_2$ 0 - 1,20 % en poids
CaO 5,40 - 6,00 % en poids
MgO 4,20 - 4,50 % en poids
CaO + MgO 9,60 - 10,50 % en poids
CaO/MgO 1,29 - 1,33 % en poids
ZnO: 4,50 - 8,10 % en poids
CaO + MgO + ZnO 14,10 - 18,60 % en poids
PbO 0 - 2,70 % en poids
$Li_2O$ 0,50 - 0,80 % en poids
$Na_2O$ 0,50 - 0,70 % en poids

3. Composition pour inclusion par fusion de verre/tungstène selon la revendication 1 ou 2, caractérisée par une somme d'alcalis $Li_2O$ + $Na_2O$ de 1,20 % en poids, un rapport $Li_2O$/$Na_2O$ de 0,71 et une valeur $T_{K100}$ d'au moins 300°C, ainsi que la composition suivante, calculée en pourcentages en poids d'oxyde:

$SiO_2$ 60,00 % en poids
$B_2O_3$ 5,50 % en poids
$Al_2O_3$ 14,50 % en poids
$ZrO_2$ 1,20 % en poids
CaO 6,00 % en poids
MgO 4,50 % en poids
ZnO 6,50 % en poids
$Li_2O$ 0,50 % en poids
$Na_2O$ 0,70 % en poids
$Sb_2O_3$ 0,10 % en poids
NaCl 0,50 % en poids